# EUROPÄISCHE PATENTSCHRIFT

(11) **EP 2 841 645 B1**
(45) Veröffentlichungstag und Bekanntmachung des Hinweises auf die Patenterteilung: **12.07.2017**
(21) Anmeldenummer: 13716815.9
(22) Anmeldetag: 18.04.2013
(51) Int. Cl.: D21F 7/10, D21F 1/00

(54) **ENDLOSES GEWEBEBAND**
ENDLESS FABRIC BELT
BANDE DE TISSU SANS FIN

(30) Priorität: 27.04.2012 DE 102012207016
(43) Veröffentlichungstag der Anmeldung: 04.03.2015
(73) Patentinhaber: Voith Patent GmbH, 89522 Heidenheim (DE)
(72) Erfinder: STRAUB, Michael, 89555 Steinheim (DE); EBERHARDT, Robert, 73479 Ellwangen (DE)
(86) Internationale Anmeldenummer: PCT/EP2013/058121
(87) Internationale Veröffentlichungsnummer: WO 2013/160194

(56) Entgegenhaltungen:
- EP-A1- 1 808 527
- WO-A1-2012/022629
- WO-A1-2012/113767
- WO-A2-2009/032271
- DE-A1-102010 039 364

## Beschreibung

Die vorliegende Erfindung betrifft endlose Gewebebänder zum Einsatz in Maschinen für die Papier, Karton- oder Tissueherstellung und/oder -verarbeitung und bezieht sich auf ein Gewebebänder, welches vor dem Endlosmachen in offenem Zustand mit zwei stirnseitigen Enden vorliegt und anschließend dadurch endlos gemacht sind, indem Endabschnitte der Maschinenrichtungsfäden der beiden stirnseitigen Enden unter Ausbildung von Treffstellen zusammengeführt und zur Ausbildung eines Nahtbereichs mit Maschinenquerrichtungsfäden verwoben sind.

Die Herstellung von Papier beginnt in der Regel mit dem Ausbilden einer Faserstoffbahn aus einer Faserstoffsuspension in der Formierpartie einer Papiermaschine. Die Suspension und die sich daraus durch Entwässern entwickelnde Faserstoffbahn liegen auf einem endlosen Band auf, das über Walzen umgelenkt innerhalb der Formierpartie umläuft. In nachfolgenden Sektionen der Papiermaschine wird die in der Formierpartie gebildete Faserstoffbahn weiter entwässert, wobei die Faserstoffbahn auch in diesen Sektionen auf als endlose Bänder ausgebildeten Bespannungen aufliegend transportiert wird.

Unter Garn ist ein langes, dünnes und flexibles Gebilde aus einer oder mehreren Fasern zu verstehen, das heißt eine Faser oder ein Faserverbund, dessen Länge seine Querschnittsabmessungen um ein Vielfaches übersteigt. Bei der Herstellung von Gewebebändern für Papiermaschinenbespannungen finden überwiegend polymere Monofilamente Verwendung, das heißt aus einem Polymer in Form einer einzigen Faser gebildete Garne. Bei Pressfilzgrundgeweben werden statt oder zusätzlich zu Monofilamenten häufig auch aus Monofilamenten, oder seltener, aus Stapelfasergarnen zusammengedrehte Zwirne verwendet. Die Gewebebänder können dabei entweder selbst die Bespannung bilden, oder wie bspw. bei den in der Presspartie verwendeten Pressfilzen als Trägersubstrat für eine Faservliesstruktur dienen.

Zur Herstellung von endlosen Gewebebändern sind verschiedene Technologien bekannt, beispielsweise Rundweben oder Anweben von Stecknähten zum lösbaren Verbinden der Bespannungsenden. Ferner sind noch üblicherweise aus Monofilamenten hergestellte Flachgewebe bekannt, die mittels einer sogenannten Webnaht zu einem endlosen Gewebeband geschlossen werden.

Die Herstellung von endlosen Gewebebändern für Bespannungen zum Einsatz in Papiermaschinen beginnt üblicherweise mit dem Weben eines flachgewebten Bands, wobei die Kettfäden Maschinenrichtungsfäden und die Schussfäden Maschinenquerrichtungsfäden bilden. Im Hinblick auf eine verbesserte mechanische Belastbarkeit wie auch Biegesteifigkeit sind die flach gewobenen Gewebebänder häufig ein-, zwei- oder mehrlagig aufgebaut, wobei sich die einzelnen Weblagen in Material, Stärke und Führung ihrer Garne voneinander unterscheiden können. Durch regelmäßiges Eingreifen von Garnen einer Weblage in die Bindung einer anderen Weblage kann dabei eine stabile flächige Verbindung der einzelnen Weblagen erreicht werden.

Ein so hergestelltes flaches Gewebeband wird anschließend auf Länge konfektioniert und über eine deren Stirnkanten verbindende Naht endlos geschlossen. Der Nahtbereich erstreckt sich in Maschinenquerrichtung über die gesamte Breite eines endlosen Gewebebandes und kann sich in Maschinenrichtung über eine Länge von 5 und 70 cm erstrecken. Unter der Maschinenrichtung eines Bandes ist hierbei die Bewegungsrichtung des Bandes beim bestimmungsgemäßen Gebrauch in einer Papiermaschine zu verstehen. Unter der Maschinenquerrichtung ist die sich senkrecht zur Maschinenrichtung erstreckende Richtung des Gewebebandes zu verstehen.

Damit der Nahtbereich keine Markierung der Faserstoffbahn verursacht, müssen deren Entwässerungseigenschaften und Oberflächenstruktur so weit als möglich dem des als Vollgewebe bezeichneten restlichen endlosen Gewebebands entsprechen. Idealerweise setzt sich die Webstruktur des Vollgewebes im Nahtbereich fort, wozu ein quer zur Webrichtung des Vollgewebes vorzunehmender Webprozess erforderlich ist, der entweder manuell oder auf eigens dazu eingerichteten Web- bzw. Nahtmaschinen, beispielsweise einer entsprechend angepassten Jacquard-Webmaschine, vorgenommen wird.

Zur Herstellung des Nahtbereichs werden an beiden stirnseitigen Enden eines flach gewobenen Gewebebands zunächst die Maschinenquerrichtungsfäden aus dem Vollgewebe ausgelöst, um die Endabschnitte der Maschinenrichtungsfäden freizulegen. Die so freigemachten Endabschnitte der Maschinenrichtungsfäden des einen stirnseitigen Endes und die Endabschnitte der Maschinenrichtungsfäden des anderen stirnseitigen Endes des Gewebebandes werden anschließend jeweils paarweise unter Ausbildung von Treffstellen zusammengeführt und zur Ausbildung des Nahtbereichs mit Maschinenquerrichtungsfäden verwoben. Die Festigkeit derart hergestellter Nähte wird neben der Anzahl und Ausprägung der Abkröpfungen durch die Länge sog. "Interlocks" bestimmt, wobei die Länge eines Interlock durch die Anzahl der Maschinenquerrichtungsfäden festgelegt wird, mit denen die paarweise zusammengeführten Endabschnitte der Maschinenrichtungsfäden gemeinsam verwoben sind, während diese parallel nebeneinander verlaufen. Dies lässt sich dadurch erklären, da bei solchen Nähten die Nahtfestigkeit wesentlich durch die mechanische Umklammerung der Fadenkröpfungen an den Kreuzungsstellen von Maschinenrichtungs- und Maschinenquerrichtungsfäden sowie durch die Reibungskräfte zwischen den Fäden basiert.

Bei der Herstellung von Tissuepapier wird oft ein sog. TAD (Through Air Drying) Verfahren angewendet, bei dem die Faserstoffbahn zum Trocknen, während diese auf einem sog. TAD-Sieb geführt wird, mit heißer Luft durchströmt wird. Um die Durchströmung von Luft zur Trocknung der Faserstoffbahn zu ermöglichen, können solche TAD-Siebe eine hohe Permeabilität von bis zu ca. 700cfm oder mehr haben. Um eine hohe Permeabilität für Fluid bereitzustellen, sind TAD-Siebe oftmals durch sehr "offene" Gewebe gebildet, welche im Vergleich zu anderen Geweben für andere Anwendungen, wie bspw. Pressfilzen oder Formiersieben, eine geringere Fadendichte haben. Um keine negativen Einflüsse bei der Herstellung einer Faserstoffbahn zu haben, sollte der Nahtbereich solcher TAD-Siebe eine gleiche oder zumindest nahezu gleiche Permeabilität für Fluid, wie bspw. Wasser oder Luft oder Gase, haben wie das Vollgewebe.

Um eine ausreichend hohe Festigkeit der Naht erzielen zu können, ist es insbesondere bei "offenen" Gewebebändern notwendig, den Überlappungsbereich der die Interlocks bildenden Maschinenrichtungsfäden möglichst groß und damit die Länge des Interlocks möglichst groß zu wählen. Da im Bereich der Interlocks die Permeabilität stark reduziert ist, bewirken die Interlocks mit großer Länge, dass die Permeabilität im Nahtbereich oftmals in einem nicht akzeptablen Maß von der Permeabilität im Vollgewebe abweicht.

Im Stand der Technik wird vorgeschlagen, den Nahtbereich mittels stoffschlüssiger Verbindung der Fäden aufgrund der Einwirkung von Laserenergie zu verstärken. Hierzu schlägt die WO2009/032271 bspw. vor, die Festigkeit der Naht dadurch zu verstärken, indem im Nahtbereich im Bereich mehrerer in Maschinenquerrichtung verlaufender Streifen die Maschinenrichtungsfäden und/oder die Maschinenquerrichtungsfäden an Garnkontaktstellen formschlüssig miteinander verbunden sind.

Aus der DE 10 2010 039 364 und der WO 2012/022629 sind ebenfalls Gewebebänder bekannt, bei denen im Nahtbereich Maschinenrichtungsfäden und Maschinenquerrichtungsfäden an Garnkontaktstellen stoffschlüssig miteinander verbunden sind.

Die so hergestellten Nahtverbindungen bei denen die Nahtfestigkeit durch eine stoffschlüssige Verbindung zwischen den Fäden wesentlich beeinflusst wird, weisen gegenüber den lediglich aufgrund von Reibungskräften gehaltenen Nahtverbindungen eine deutlich erhöhte Nahtfestigkeit auf.

Bei den aus dem Stand der Technik bekannten Gewebebändern besteht das Problem, dass die Endabschnitte der Maschinenrichtungsfäden aus dem

Gewebe heraustreten können, da diese oftmals nicht fest im Gewebe verankert sind. Dies kann zum Einen eine negative Beeinflussung der Qualität der hergestellten Faserstoffbahn zur Folge haben, da durch das Heraustreten der Fadenenden Löcher im Gewebeband entstehen können und die herausgetretenen Fadenenden ferner aus der Oberfläche des Gewebebands herausschauen und die Faserstoffbahn beschädigen können. Ferner können die herausgetretenen Fadenenden ein Startpunkt für ein Heraustrennen der Maschinenrichtungsfäden aus dem Gewebe sein. Die oben beschriebenen Nachteile bestehen insbesondere bei Gewebebändern mit einer offenen Webstruktur sowie solchen mit einer nur geringen Anzahl an Lagen von Maschinenrichtungs- und/oder Maschinenquerrichtungsfäden.

Es ist die Aufgabe der vorliegenden Erfindung ein endloses Gewebeband vorzuschlagen, welches die obigen Nachteile nicht oder nur in stark reduziertem Masse hat.

Die Aufgabe wird gelöst durch ein endloses Gewebeband zum Einsatz als Bespannung in einer Papier-, Karton- oder Tissuemaschine, welches Maschinenrichtungsfäden und sich mit diesen überkreuzenden Maschinenquerrichtungsfäden umfasst, wobei zumindest ein Teil der Maschinenrichtungsfäden und/oder Maschinenquerrichtungsfäden durch Garne gebildet sind, die im wesentlichen aus einem thermoplastischen, für Licht einer Wellenlänge bzw. eines Wellenlängenbereichs transparenten Polymermaterial bestehen. Das erfindungsgemäße endlose Gewebeband liegt vor dessen Endlosmachen in offenem Zustand vor mit zwei stirnseitigen Enden hergestellt und anschließend dadurch endlos gemacht, indem Endabschnitte der Maschinenrichtungsfäden des einen stirnseitigen Endes und Endabschnitte der Maschinenrichtungsfäden des anderen stirnseitigen Endes des Gewebebandes jeweils paarweise unter Ausbildung von Treffstellen zusammengeführt und zur Ausbildung eines Nahtbereichs mit Maschinenquerrichtungsfäden verwoben sind. Ferner ist zumindest ein Teil der Garne im Nahtbereich aufgrund eines das Licht absorbierenden und an Garnkontaktstellen angeordneten Materials sowie der Einwirkung des Lichts an den Garnkontaktstellen stoffschlüssig miteinander verbunden. Im Nahtbereich sind mehrere, insbesondere drei oder mehr, zueinander beabstandete streifenförmige Gewebeabschnitte gebildet, in denen die, d.h. alle Treffstellen und die, d.h. alle stoffschlüssig miteinander verbundenen Garnkontaktstellen angeordnet sind und zwischen zwei unmittelbar benachbarten die Treffstellen umfassenden Gewebeabschnitten ist jeweils ein streifenförmiger Gewebeabschnitt ohne Treffstellen und ohne stoffschlüssige Verbindung der Garnkontaktstellen gebildet. Dadurch dass Garne im Nahtbereich stoffschlüssig miteinander verbunden sind, wird die Festigkeit der Naht deutlich erhöht.

Durch die Anordnung der stoffschlüssigen Verbindungsstellen der Garne in mehreren streifenförmigen und zueinander beabstandeten Bereichen kann die Biegesteifigkeit einer solchen "verschweißten Naht" deutlich gegenüber einer entlang der gesamten Länge des Nahtbereichs verschweißten Naht reduziert werden. Ferner kann die hierdurch die Dehnung des Gewebebands reduziert werden sowie die Scherfestigkeit -hierdurch wird eine Querverzug des Gewebebands verhindert- erhöht werden.

Dadurch, dass ferner die Treffstellen in den streifenförmigen Bereichen konzentriert sind, in denen Garne stoffschlüssig miteinander verbunden sind, werden die Maschinenrichtungsfäden im Bereich ihrer Enden durch die stoffschlüssige Verbindung zusätzlich fixiert. Ein Heraustreten und Heraustrennen der Fadenenden wird daher wirkungsvoll reduziert oder sogar unterbunden.

Dies ist insbesondere bei Gewebebändern sinnvoll, die aus zwei oder weniger Lagen von Maschinenrichtungsfäden und/oder zwei oder weniger Lagen von Maschinenquerrichtungsfäden gebildet sind und/oder die eine "offene" Webstruktur zur Bereitstellung einer hohen Permeabilität haben mit daraus folgend wenigen und "flachen" Fadenabkröpfungen.

Durch die stoffschlüssige Verbindung von Garnen im Nahtbereich, kann trotz ausreichend hoher Nahtfestigkeit, ferner die Länge der Interlocks extrem kurz gewählt werden, so dass im Nahtbereich eine Permeabilität gleich oder ähnlich der im Vollgewebe erhalten wird.

Unter dem Begriff "transparent" ist in dieser Schrift zu verstehen, dass ein für Licht aus einem bestimmten Wellenlängenbereich transparentes Medium dieses Licht nicht oder in so einem geringen Umfang absorbiert, beispielsweise maximal 10%, dass es zu keiner Erweichung des Mediums kommt.

Unter dem Begriff "Nahtbereich" wird der Bereich des endlosen Gewebebands verstanden, der beim Endlosmachen des Gewebebands neu verwoben wird. Vorteilhafte Ausgestaltungen und Weiterbildungen der Erfindung sind in den Unteransprüchen angegeben. Jeder der streifenförmigen, die Treffstellen enthaltende Bereich erstreckt sich über die gesamte Breite des Gewebebandes. Vorzugsweise sind die streifenförmigen, die Treffstellen enthaltenden Bereiche in Maschinenrichtung zueinander beabstandet angeordnet.

Denkbar ist insbesondere, dass das offen vorliegende Gewebeband flach gewoben hergestellt ist.

Es sind verschiedene Möglichkeiten der Ausbildung von Treffstellen denkbar. Bei einer Treffstelle kann es sich bspw. um eine Stelle handeln, an der die zwei zusammengeführten Endabschnitte der Maschinenrichtungsfäden die beiden Endabschnitte ein und desselben Maschinenrichtungsfaden sind. Denkbar ist aber auch, dass die zwei zusammengeführten Endabschnitte der Maschinenrichtungsfäden Endabschnitte unterschiedlicher Maschinenrichtungsfäden sind. Handelt es sich bei den zwei zusammen geführten Endabschnitten um solche unterschiedlicher Maschinenrichtungsfäden, so sind diese im Gewebe um maximal fünf, bevorzugt maximal einen Maschinenquerrichtungsfadenrapport, besonders bevorzugt um maximal zwei Maschinenrichtungsfäden zueinander versetzt.

Die Endabschnitte können an der Treffstelle aufeinander treffen und mit keinem Maschinenquerrichtungsfaden gemeinsam verwoben sein oder mit einem oder mehreren Maschinenquerrichtungsfäden gemeinsam verwoben sein. Im erst genannten Fall treffen sich die Webpfade der beiden zusammengeführten Maschinenrichtungsfäden. Im zweit genannten Fall überlappen sich die Webpfade der beiden Maschinenrichtungsfäden und die Endabschnitte verlaufen zumindest abschnittweise nebeneinander.

In beiden oben genannten Fällen können sich die Endabschnitte der beiden Maschinenrichtungsfäden berühren.

Denkbar ist auch, dass die beiden zusammengeführten Endabschnitte in Maschinenrichtung betrachtet zueinander beabstandet enden, wodurch an der Treffstelle ein, maximal zwei Maschinenquerrichtungsfäden angeordnet sind, die mit keinem der beiden Endabschnitte verwoben sind. Im letztgenannten Fall enden die Webpfade der beiden an der Treffstelle zusammengeführten Endabschnitte ein oder maximal zwei Maschinenquerrichtungsfäden voneinander beabstandet zueinander. Denkbar ist in diesem Zusammenhang insbesondere, dass die jeweils paarweise zusammengeführten und Treffstellen bildenden Endabschnitte an der jeweiligen Treffstelle zwischen zwei unmittelbar aufeinander folgenden Schussfäden verlaufend, das Gewebe gemeinsam verlassen.

Vorzugsweise liegt die Wellenlänge bzw. der Wellenlängenbereich im Bereich des nahen Infrarot, insbesondere im Wellenlängenbereich von 700nm bis 1200nm, so dass zum stoffschlüssigen Verbinden der Garnkontaktstellen herkömmliche NIR-Transmissionslaserschweißvorrichtungen und -verfahren verwendet werden können, wie beispielsweise Diodenlaser mit Emissionswellenlängen im Bereich von 808 bis 980 nm oder Nd:YAG-Laser mit einer Emissionswellenlänge von 1064 nm oder Infrarotstrahler. Die Leistung der verwendeten Lichtquelle kann hierbei im Bereich von ca. 100-600 Watt liegen.

Zum Verbinden der Garnkontaktstellen werden die Lichtquelle und das Gewebeband vorzugsweise relativ zueinander bewegt, wobei es sich als vorteilhaft erwiesen hat, wenn die Relativgeschwindigkeit zwischen Lichtquelle und Gewebeband im Bereich von 5mm/s bis 50mm/s liegt. Von Vorteil ist ferner, wenn der auf das Gewebeband gerichtete Lichtstrahl eine parallel zur Maschinenrichtung gerichtete Längsausdehnung, auch Linienbreite genannt, hat, die breiter ist als die Längserstreckung des jeweiligen die Treffstellen und stoffschlüssigen Verbindungen enthaltenden streifenförmigen Gewebeabschnitte. Durch diese flächige Ausbildung des Laserstrahls können die Treffstellenbereiche sicher und schnell behandelt werden. Alternativ wäre auch eine punktförmige Behandlung denkbar, diese ist aber zeitintensiver.

Denkbar ist, dass zumindest einige der stoffschlüssig miteinander verbundenen Garnkontaktstellen an Stellen gebildet sind, an denen sich Maschinenrichtungsfäden und Maschinenquerrichtungsfäden überkreuzen.

Um eine gute stoffschlüssige Verbindung an den Garnkontaktstellen zu erhalten ist es insbesondere von Vorteil, wenn während der Einwirkung des Lichts die stoffschlüssig zu verbindenden Garnkontaktstellen durch Einwirkung einer äußeren Kraft aneinander gepresst werden. Sollen bspw. die durch Kreuzungsstellen von Maschinenrichtungsfäden und Maschinenquerrichtungsfäden gebildeten Garnkontaktstellen stoffschlüssig miteinander verbunden werden, kann die für das aneinander Pressen notwendige äußere Kraft bspw. dadurch erzeugt werden, indem das endlose Gewebeband während der Einwirkung des Lichts gespannt wird. Zusätzlich oder alternativ hierzu ist noch ein Anpressen der Fäden an den Garnkontaktstellen mittels einer - insbesondere für das Licht transparenten- Andruckrolle denkbar. Zusätzlich oder alternativ dazu ist denkbar, dass zumindest einige der stoffschlüssig miteinander verbundenen Garnkontaktstellen an Stellen gebildet sind, an denen die zusammengeführten Endabschnitte der Maschinenrichtungsfäden nebeneinander verlaufen und sich berühren.

Vorzugsweise ist das Licht absorbierende Material in das Polymermaterial zumindest einiger der Garne eingebracht. Alternativ oder zusätzlich dazu ist denkbar, dass zumindest einige der Garne mit dem das Licht absorbierenden Material beschichtet sind. Die Beschichtung kann als flüssige Beschichtung aufgebracht werden. Als flüssiges Beschichtungsmaterial kann bspw. ein Material verwendet werden, das von der Firma Gentex unter der Bezeichnung "Clearweld" vertrieben wird.

Denkbar ist, dass zumindest einige, insbesondere alle der Maschinenquerrichtungsfäden, die im Bereich der die Treffstellen enthaltenden Streifen angeordnet sind, das Licht absorbierende Material umfassen. Denkbar ist hierbei insbesondere, dass die Maschinenrichtungsfäden für das Licht transparent sind und nur die Maschinenquerrichtungsfäden, die im Bereich der die Treffstellen enthaltenden Streifen angeordnet sind, das das Licht absorbierende Material umfassen, wobei die Maschinenrichtungsfäden und die Maschinenquerrichtungsfäden an den Stellen stoffschlüssig miteinander verbunden sind, an denen sich die Maschinenrichtungsfäden und die Maschinenquerrichtungsfäden im Bereich der die Treffstellen enthaltenden Streifen überkreuzen.

Zusätzlich oder alternativ dazu ist denkbar, dass zumindest einige der Maschinenrichtungsfäden entlang deren Längserstreckung im Bereich der die Treffstellen enthaltenden Streifen, das Licht absorbierende Material umfassen. Denkbar ist hierbei insbesondere, dass die Maschinenquerrichtungsfäden für das Licht transparent sind und die Maschinenrichtungsfäden zumindest entlang deren Längserstreckung im Bereich der die Treffstellen enthaltenden Streifen, das Licht absorbierende Material umfassen, wobei die Maschinenrichtungsfäden und die Maschinenquerrichtungsfäden an den Stellen stoffschlüssig miteinander verbunden sind, an denen sich die Maschinenrichtungsfäden und die Maschinenquerrichtungsfäden im Bereich der die Treffstellen enthaltenden Streifen überkreuzen.

Das Licht absorbierende Material kann bspw. Ruß und/oder Farbpigmente und/oder CNT umfassen. Versuche der Anmelderin haben gezeigt, dass es für eine gute Balance zwischen ausreichender Absorptionsfähigkeit und keiner negativen Beeinflussung der Fadeneigenschaften aufgrund des absorbierenden Materials vorteilhaft ist, wenn das absorbierende Material in dem Polymermaterial der Garne einen Anteil von 0,1 Gew.% bis 10 Gew.%, bevorzugt 1 Gew.% bis 3 Gew.% hat.

Die erfindungsgemäße Lösung ist insbesondere dann von Vorteil, wenn es sich bei dem endlosen Gewebeband um ein offenes Gewebe und/oder um ein Gewebe mit nur wenigen Gewebelagen handelt. Daher ist das endlose Gewebeband durch ein Gewebe gebildet, das maximal zwei Lagen von Maschinenrichtungsfäden und eine Lage von Maschinenquerrichtungsfäden oder maximal zwei Lagen von Maschinenquerrichtungsfäden und eine Lage von Maschinenrichtungsfäden oder das eine Lage von Maschinenquerrichtungsfäden und eine Lage von Maschinenrichtungsfäden hat. Dabei hat das endlose Gewebeband eine Fadendichte von 20 bis 100 Maschinenrichtungsfäden pro 2,54 cm (inch) und/oder eine Fadendichte von 10 bis 90 Maschinenquerrichtungsfäden pro 2,54 cm (inch). Bei dem endlosen Gewebeband kann es sich insbesondere um ein strukturiertes Sieb oder Trockensieb handeln. Das strukturierte Sieb kann bspw. als TAD-Sieb Verwendung finden. Die vorgenannten Fadendichten treffen insbesondere für strukturierte Siebe zu. Solche Siebe können eine Permeabilität im Bereich von 300 bis 1100 cfm haben. Ferner kann es sich bei dem endlosen Gewebeband auch um ein Pressband für den Einsatz in einer Bandpressenanordnung wie bspw. in der WO2005/075736 beschrieben handeln, welches flach gewoben hergestellt und nachfolgend endlos gemacht ist und geeignet ist, bei einer Zugspannung von zumindest 30kN/m betrieben zu werden. Die vorgenannten Siebe haben üblicherweise maximal zwei Kettfadenlagen und eine Schussfadenlage oder maximal zwei Schussfadenlagen und eine Kettfadenlage oder eine Schussfadenlage und eine Kettfadenlage.

Vorzugsweise ist das erfindungsgemäße endlose Gewebeband derart ausgebildet, dass die Permeabilität im Bereich der die Treffstellen umfassenden Streifen um maximal 15%, bevorzugt maximal 10%,, besonders bevorzugt maximal 6%, von der Permeabilität des Gewebebandes außerhalb des Nahtbereichs abweicht. Hierdurch wird ein bspw. als TAD-Sieb ausgebildetes Gewebeband bereitgestellt, welches eine sehr hohe Nahtfestigkeit gepaart mit einer über seine gesamte Länge homogenen Permeabilität für Gas und Flüssigkeit hat.

Um eine gute Flexibilität des endlosen Gewebebandes im Nahtbereich zu gewährleisten ist insbesondere vorgesehen, dass im Nahtbereich die die Treffstellen enthaltenden streifenförmigen Gewebeabschnitte in Maschinenrichtung eine geringere Erstreckung haben, als die zwischen diesen angeordneten keine Treffstellen umfassenden streifenförmigen Gewebeabschnitte.

Konkret können die die Treffstellen umfassenden streifenförmigen Gewebeabschnitte eine Erstreckung in Maschinenrichtung im Bereich von 5 bis 60 mm haben und/oder die im Nahtbereich angeordneten und keine Treffstellen umfassenden streifenförmigen Gewebeabschnitte eine Erstreckung in Maschinenrichtung im Bereich von 10 bis 80 mm. Der Nahtbereich des endlosen Gewebebandes kann ferner eine Erstreckung in Maschinenrichtung im Bereich von 5 bis 50 cm haben. Der Nahtbereich kann durch die Laserbehandlung insbesondere verkleinert werden im Vergleich zu einem identischen Gewebeband ohne die Laserbehandlung im Nahtbereich.

Weitere Merkmale der Erfindung ergeben sich aus der nachfolgenden Beschreibung von Ausführungsbeispielen in Verbindung mit den Ansprüchen sowie den Figuren. Die einzelnen Merkmale können bei einer Ausführungsform gemäß der Erfindung auch in unterschiedlicher Anzahl und Kombination als bei den untenstehend angeführten Beispielen verwirklicht sein. Bei der nachfolgenden Erläuterung einiger Ausführungsbeispiele der Erfindung wird auf die beiliegenden Figuren Bezug genommen, von denen
- Figur 1: ein zur Nahtverbindung vorbereitetes Flachgewebeband in einer schematisierten Darstellung zeigt,
- Figur 2: ein mit einer Nahtverbindung geschlossenes endloses Gewebeband in einer schematisierten Darstellung zeigt,
- Figur 3a: eine Vorrichtung zum Transmissionsverschweißen von Garnüberkreuzungen im Bereich des Nahtbereichs eines endlosen Gewebebands in einer schematisierten Darstellung veranschaulicht,
- Figur 3b: eine andere Vorrichtung zum Transmissionsverschweißen von Garnüberkreuzungen im Bereich der Nahtbereichs eines endlosen Gewebebands in einer schematisierten Darstellung veranschaulicht,
- Figur 4: eine Ausbildung von stoffschlüssigen Verbindungen bei Verwendung von Schweißlicht absorbierenden Maschinenquerrichtungsgarnen in einer schematisierten Darstellung zeigt,
- Figur 5: eine Ausbildung von stoffschlüssigen Verbindungen bei Verwendung von selektiv zwischen Garnüberkreuzungen eingebrachten, Schweißlicht absorbierenden Materialien in einer schematisierten Darstellung zeigt,
- Figur 6: das Grundprinzip eines mittels Transmissionsschweißen stabilisierten Nahtbereichs geringer Steifigkeit in einer schematisierten Darstellung veranschaulicht, und
- Figur 7: verschiedene Möglichkeiten zur Ausbildung von Treffstellen zeigt.

In den Figuren sind Elemente, Komponenten oder Bereiche, die im Wesentlichen gleiche technische Funktionen erfüllen, mit gleichen Bezugszeichen versehen. Verschiedene Ausgestaltungen dieser Elemente, Komponenten oder Bereiche weisen ähnliche Bezugszeichen auf.

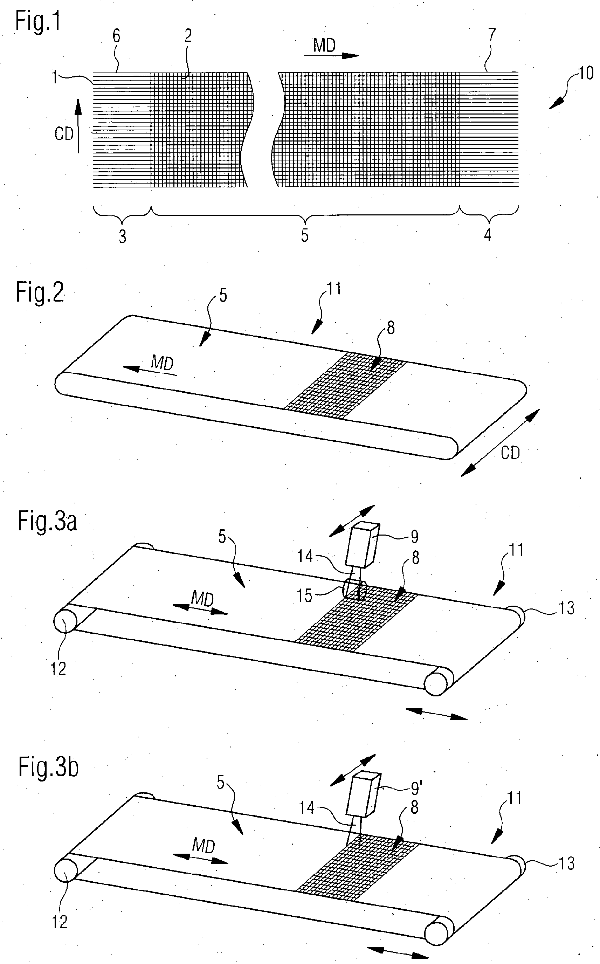

In der schematisierten Darstellung von Figur 1 ist ein auf Länge konfektioniertes flach gewobenes Gewebeband 10 mit für die Ausbildung einer Webnaht vorbereiteten stirnseitigen Enden 3 und 4 veranschaulicht. Das vorliegende Gewebeband 10 ist durch ein Gewebe aus einer Schussfadenlage und einer Kettfadenlage gebildet. Die sich in Maschinenrichtung MD erstreckenden Maschinenrichtungsfäden 1 des Gewebes 10 kreuzen sich in einem bestimmten Muster mit den sich senkrecht zu diesen in Maschinenquerrichtung CD erstreckenden Maschinenquerrichtungsfäden 2. Aus Gründen einer übersichtlichen Darstellung sind jeweils nur ein Maschinenrichtungs- und Maschinenquerrichtungsfaden mit einem Bezugszeichen versehen. Ferner sind zur besseren Veranschaulichung der Wesensmerkmale des zum Endlosverbinden vorbereiteten flach gewobenen Gewebebands Abstand und Anzahl von Maschinenrichtungs- und Maschinenquerrichtungsfäden, sowie Bindung und Abmessungen des Gewebebands 10 ohne Bezugnahme auf konkrete Ausprägungen gewählt.

Zum Fertigen eines endlosen flachgewobenen Gewebebands müssen die beiden stirnseitigen Enden 3 und 4 des Gewebebands 10 miteinander verbunden werden. Damit die Verbindungsstelle keine im Vergleich zum Rest des endlosen Gewebebands unterschiedliche Entwässerungscharakteristik aufweist, die zu Markierungen der Faserstoffbahn führen könnte, werden die Enden 3 und 4 unter Ausbildung einer Webnaht miteinander verbunden. In Vorbereitung hierzu wurden aus den Bereichen der beiden Enden 3 und 4, wie in Figur 1 dargestellt ist, die Maschinenquerrichtungsfäden 2 entfernt. Die Enden 3 und 4 weisen somit nur mehr Endabschnitte 6, 7 Maschinenrichtungsfäden auf. Da aus dem zwischen den beiden Enden 3 und 4 liegenden Bereich 5 keine Fäden und insbesondere auch keine Maschinenquerrichtungsfäden 2 ausgelöst werden, ist in diesem als Vollgewebe bezeichneten Bereich 5 die ursprüngliche Bindung vollständig erhalten.

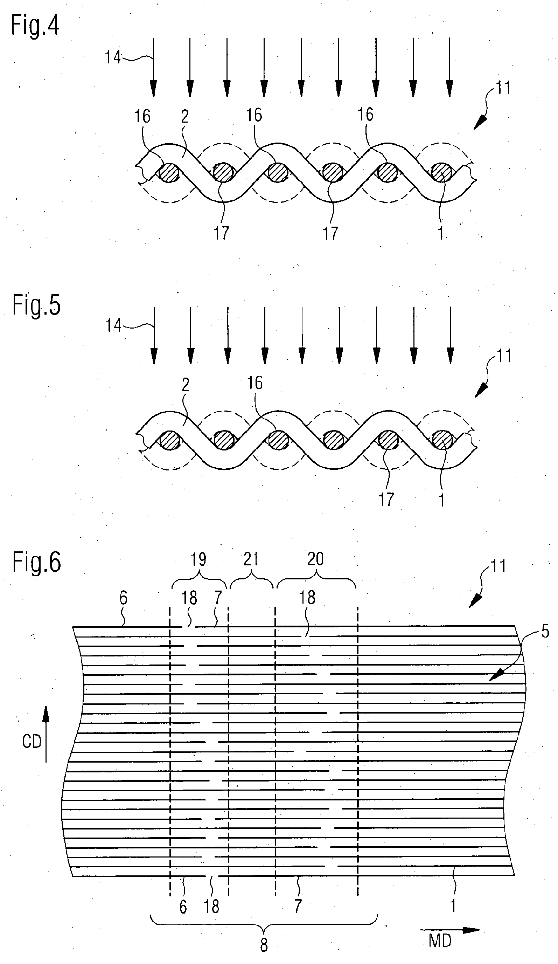

Zur Ausbildung eines Nahtbereichs 8 werden die beiden stirnseitigen Enden 3 und 4 des flach gewobenen Gewebebands 10 miteinander verbunden, indem die Endabschnitte 6 der Maschinenrichtungsfäden 1 des einen stirnseitigen Endes 3 und die Endabschnitte 7 der Maschinenrichtungsfäden 1 des anderen stirnseitigen Endes 4 des flach gewobenen Gewebebandes 10 jeweils paarweise unter Ausbildung von Treffstellen (dargestellt in Figur 6) zusammengeführt und mit Maschinenquerrichtungsfäden 2 verwoben werden.

Das Ergebnis des Webnahtprozesses ist ein endloses Gewebeband 11 mit einem Nahtbereich 8, wie dieser in der stark schematisierten Darstellung von Figur 2 veranschaulicht ist. Auf eine Illustrierung der Bindung im Vollgewebebereich 5 wurde bei dieser Darstellung zugunsten eines Hervorhebens des Nahtbereichs 8 verzichtet. In Figur 2 sind ferner die in dieser Schrift verwendeten Richtungsbezeichnungen angedeutet, das sind die Maschinenrichtung MD des endlosen Gewebebands 11 bei bestimmungsgemäßem Gebrauch in einer Maschine zur Herstellung und/oder Verarbeitung einer Faserstoffbahn und die quer hierzu orientierte Maschinenquerrichtung CD des Bandes 11.

Aufgrund der Unterbrechung der Maschinenrichtungsfäden 1 an den Treffstellen, können über die Treffstellen nur geringere Zugkräfte als über das Vollgewebe 5 aufgenommen werden. Jede Zugbelastung des Endlosgewebebands 11 führt somit immer dann zu einem Öffnen bzw. Erweitern des Nahtbereichs 8, wenn die auf die Treffstellen einwirkenden Zugkräfte nicht an andere Fäden des Gewebes übertragen werden können. In einem Nahtbereich ist eine solche Kraftübertragung an andere Garne bspw. an den Überkreuzungen des Kett- bzw. Maschinenrichtungsfadens mit zur Treffstelle benachbarten Schuss- bzw. Maschinenquerrichtungsfäden möglich. Da die Kraftübertragung jedoch durch die Haftreibung der Garne an den Überkreuzungen limitiert ist, bilden die Treffstellen somit eine Schwachstelle des Nahtbereichs.

Zur Verbesserung der Kraftüberleitung auf benachbarte Garne sind im Nahtbereich 8 Endabschnitte 6, 7 der Maschinenrichtungsfäden 1 und Maschinenquerrichtungsfäden 2 an durch Kreuzungsstellen gebildeten Garnkontaktstellen aufgrund von Laserlichteinstrahlung stoffschlüssig miteinander verbunden.

Die Stabilisierung des Nahtbereichs 8 durch stoffschlüssiges Verbinden der Garnüberkreuzungen wird vorliegend mithilfe eines wie zuvor erläuterten Transmissionsschweißverfahrens vorgenommen. Hierzu wird das endlos gemachte Gewebeband 11 zunächst, beispielsweise mittels zweier Walzen 12 und 13, wie in den Figuren 3a und 3b veranschaulicht ist, gespannt, wobei zum Spannen des Gewebebands 11 und damit auch des Nahtbereichs 8 wenigstens eine der beiden Walzen 12, 13 wie in der Figur 3a, 3b angedeutet verschiebbar gelagert ist. Selbstverständlich kann die Vorrichtung noch weitere Walzen enthalten, mithilfe derer das Band 11 mehrmals umgelenkt werden kann, um so eine kürzere Bauform der Anlage zu erhalten. Andere geeignete Vorrichtungen weisen eine Spannvorrichtung auf, bei der nur ein den Nahtbereich 8 umfassender Teilbereich des endlosen Gewebebands 11 gespannt wird, beispielsweise mithilfe von Klemmzangen.

Zum Verschweißen von Maschinenrichtungs- und Maschinenquerrichtungsfäden an den Überkreuzungsstellen wird ein von einem im nahen Infrarot emittierenden Laser 9 oder einem Infrarotstrahler abgestrahltes Licht 14 auf die zu verschweißenden Überkreuzungen von Maschinenrichtungs- und Maschinenquerrichtungsfäden geführt. Als Laser eignen sich beispielsweise Diodenlaser mit Emissionswellenlängen im Bereich von 808 bis 980 nm und Nd:YAG-Laser mit einer Emissionswellenlänge von 1064 nm. Vorzugsweise werden Laser oder Infrarotstrahler mit Emissionen aus dem Bereich von etwa 700 bis 1200 nm verwendet, da Licht in diesem Wellenlängenbereich von den Garnen des Gewebes in einem nicht bzw. nur gering, ein Aufheizen der Garne bewirkenden Maße absorbiert wird.

In der in Figur 3a veranschaulichten Vorrichtung wird das Laserlicht 14 von der Laserquelle 9 fächerförmig abgestrahlt und durch eine für das verwendete Licht durchsichtige Walze 15 linienförmig auf die Kontaktfläche zwischen Walze 15 und Nahtbereich 8 konvergiert. Der fächerförmige Lichtstrahl 14 kann sowohl durch schnelles Ablenken des Laserlichts als auch statisch mittels geeigneter Optiken erzeugt werden. Die mittels der Walze 15 linienförmig konzentrierte Laserenergie wird von im Bestrahlungsbereich angeordneten, das Licht absorbierenden Material in thermische Energie umgewandelt, die schließlich zu einem Aufschmelzen der Garne im Bereich des absorbierenden Materials führt. Der von der Walze 15 auf das Gewebe ausgeübte Druck begünstigt den Stoffschluss zwischen sich an einer Aufschmelzzone berührenden Garnen.

In der in Figur 3b veranschaulichten Vorrichtung wird das vom Schweißkopf 9' fächerförmig abgestrahlte Schweißlicht'14 (entweder Laserlicht oder Licht eines geeigneten Infrarotstrahlers) direkt auf den Nahtbereich 8 gerichtet. Die Vorrichtung weist somit keine für das Schweißlicht durchsichtige Walze im Bestrahlungsgang auf. Bei dieser Vorrichtung wird der durch die Fadenführung bewirkte Kontaktdruck zwischen den Garnen an deren Überkreuzungen zur Begünstigung eines Stoffschlusses genutzt. Der Kontaktdruck kann durch Spannen des endlosen Gewebebands 11, beispielsweise mithilfe der beiden Walzen 12, 13 verstärkt werden.

Im Falle von wie in den Figuren Figur 3a und 3b veranschaulichten Vorrichtungen genügt zum Bestrahlen beliebig wählbarer Teilflächen des Nahtbereichs 8 eine Verfahrbarkeit von Laserkopf 9 (bzw. anderer geeigneter Lichtquelle) und Walze 15 bzw. von Schweißkopf 9' quer zur Maschinenrichtung MD, d.h. in Maschinenquerrichtung CD des endlosen Gewebebands 11, da ein Verschieben des Nahtbereichs 8 relativ zum Schweißlichts 14 in Maschinenrichtung MD mittels Rotation der Walzen 12, 13 vorgenommen werden kann.

Zum Verschweißen von Garnüberkreuzungen im Nahtbereich 8 muss das eingestrahlte Licht zwischen den sich an den Überkreuzungen berührenden Garnen absorbiert werden. Hierzu kann bspw. einer der sich überkreuzenden Fäden so ausgebildet sein, dass er das zum Verschweißen benutzte Licht absorbiert. Dies wird bspw. dadurch bewirkt, indem in das Polymermaterial dieses Fadens das Licht absorbierendes Material eingebracht ist. Denkbar ist aber auch, dass das Licht absorbierende Material an den Überkreuzungsstellen zwischen die Garne bspw. in Form einer Beschichtung eingebracht ist.

Licht im nahen Infrarotbereich absorbierende Garne können z. B. durch Einbringen von Kohlenstoff, beispielsweise in Form von Ruß, Graphit oder Kohlenstoffnanoröhren, in das thermoplastische Polymermaterial hergestellt werden. Absorberlösungen zum Aufbringen als Beschichtung auf die Verschweißungsstellen werden beispielsweise von der Firma Gentex unter dem Namen "Clearweld" angeboten. Es können jedoch auch geeignete Farbstoffe verwendet werden, die in einem Lösungsmittel gelöst auf die Garne aufgebracht werden.

Bei Einsatz von das Schweißlicht 14 absorbierenden Garnen werden diese, damit ein Teil der Garnüberkreuzungen verschweißt werden kann, vorzugsweise entweder als Maschinenquerrichtungsfäden 2 im Nahtbereich 8 oder als Maschinenrichtungsfäden 1 des endlosen Gewebebands 11 verwendet. Der erste Fall ist in Figur 4 veranschaulicht, worin ein in Maschinenquerrichtung CD des Bandes 11 verlaufender Schnitt durch einen Teil des Nahtbereichs 8 dargestellt ist. Die Figur 4 zeigt zwei hintereinander angeordnete Maschinenquerrichtungsfäden 2, die im Querschnitt dargestellte Maschinenrichtungsfäden 1 überkreuzen. Die Maschinenquerrichtungsfäden 2 absorbieren von oben auf das Gewebe eingestrahltes Schweißlicht 14, die Maschinenrichtungsfäden 1 sind für dieses Licht transparent. Die folgende Diskussion bezieht sich auf die Kreuzungsstellen des in der Figur 4 vorderen Maschinenquerrichtungsfadens 2 mit den Maschinenrichtungsfäden 1. Das Schweißlicht 14 erreicht keine Garnüberkreuzung 16, die in Bezug auf die Lichteinstrahlung von einem Maschinenquerrichtungsfaden 2 abgedeckt ist, so dass diese Garnüberkreuzungen 16 vom Schweißlicht 14 nicht aufgeschmolzen werden. An den anderen Überkreuzungsstellen 17, an denen die für das eingestrahlte Schweißlicht 14 transparenten Maschinenrichtungsfäden 1 oberhalb der das Schweißlicht 14 absorbierenden Maschinenquerrichtungsfäden 2 liegen, erreicht das Schweißlicht 14 die Garnkontaktstellen 17 zwischen den Garnen und kann den Maschinenquerrichtungsfaden 2 dort so aufheizen, dass an dieser Stelle eine stoffschlüssige Verbindung der beiden Garne herbeigeführt wird.

Um wie in Figur 5 veranschaulicht alle Garnüberkreuzungen im Schweißbereich stoffschlüssig miteinander verbinden zu können, kann der Schweißbereich entweder von beiden Seiten des Gewebes mit Schweißlicht bestrahlt werden, oder es können im Schweißbereich ausschließlich für das Schweißlicht 14 transparente Garne verwendet werden. Ein (in der Figur nicht dargestelltes) Schweißlicht 14 absorbierendes Material wird zwischen die Garne an den Überkreuzungsstellen von Maschinenrichtungs- und Maschinenquerrichtungsfäden eingebracht. Durch einen entsprechenden selektiven Absorberauftrag nur an den Garnkontaktstellen 16, 17 kann das Schweißlicht 14 alle Garne durchdringen und wird ausschließlich vom zwischen den Überkreuzungen angeordneten Absorbermaterial absorbiert, das sich in der Folge aufheizt und zu einem Aufschmelzen der umgebenden Garnbereiche führt. Das Aufschmelzen sich berührender Garnbereiche führt schließlich zur Herstellung des Stoffschlusses.

Die Figur 6 zeigt eine Ausschnittsvergrößerung des endlosen Gewebebands 11, bei der das Gewicht auf den Nahtbereich 8 gelegt ist.

Man erkennt, dass jeweils ein Endabschnitt 6 der Maschinenrichtungsfäden 1 des einen stirnseitigen Endes und ein Endabschnitt der Maschinenrichtungsfäden 1 des anderen stirnseitigen Endes des Gewebebandes 1 paarweise unter Ausbildung jeweils einer Treffstelle 18 zusammengeführt und zur Ausbildung des Nahtbereichs mit (nicht dargestellten) Maschinenquerrichtungsfäden verwoben sind. Es sei hierbei angemerkt, dass in der Figur 6 der Übersichtlichkeit halber nur einige wenige der Endabschnitte 6, 7 und Treffstellen 18 mit einem Bezugszeichen versehen sind.

Man erkennt beidseitig des Nahtbereichs 8 Abschnitte des Vollgewebes 5 des endlosen Bandes 11. Der in der Figur 6 dargestellte Nahtbereich 8 umfasst vorliegend zwei zueinander beabstandete streifenförmige Gewebeabschnitte 19, 20, in denen die -d.h. alle- Treffstellen 18 und die -d.h. alle- stoffschlüssig miteinander verbundenen Garnkontaktstellen des Gewebebands 11 angeordnet sind. Zwischen den zwei unmittelbar benachbarten die Treffstellen 18 umfassenden Gewebeabschnitten 19, 20 ist ein streifenförmiger Gewebeabschnitt 21 gebildet, in dem keine Treffstellen und keine stoffschlüssig miteinander verbundenen Garnkontaktstellen gebildet sind.

Man erkennt ferner, dass sich sämtliche streifenförmigen Gewebeabschnitte 19-21 über die gesamte Breite des Gewebebands in Maschinenquerrichtung CD des Gewebebands erstrecken.

Vorliegend sind die stoffschlüssig miteinander verbundenen Garnkontaktstellen an den Kreuzungsstellen der Maschinenrichtungsfäden 1 mit den Maschinenquerrichtungsfäden 2 gebildet, wobei vorliegend die Maschinenquerrichtungsfäden 2 das absorbierende Material derart umfassen, dass dieses in das Polymermaterial der Maschinenquerrichtungsfäden 2 eingebracht ist. Das absorbierende Material kann hierbei bspw. Russ und/oder Farbpigmente und/oder CNT umfassen.

Bei dem vorliegenden Ausführungsbeispiel haben die beiden die die Treffstellen umfassenden streifenförmigen Gewebeabschnitte 19, 20 eine Erstreckung von 5 bis 60 mm in Maschinenrichtung MD, wobei der zwischen den beiden streifenförmigen Gewebeabschnitten 19, 20 angeordnete und keine Treffstellen umfassenden streifenförmige Gewebeabschnitt 21 in Maschinenrichtung MD eine Erstreckung von 20 bis 80 mm hat. Ferner hat der Nahtbereich eine Erstreckung in Maschinenrichtung im Bereich von 5 bis 50 cm.

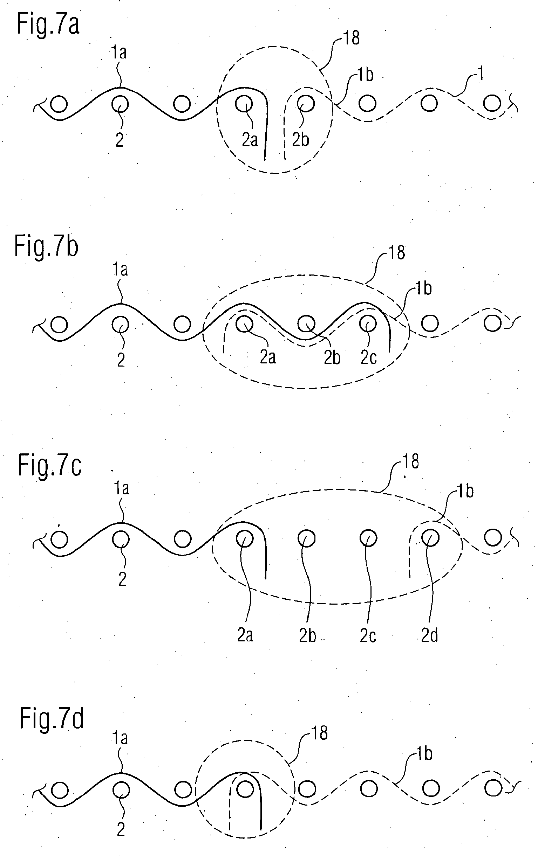

Die Figuren 7a-7d zeigen verschiedene Möglichkeiten der Ausbildung von Treffstellen 18.

Die Figur 7a zeigt eine Treffstelle 18 bei der die beiden zusammen geführten Endabschnitte 1a und 1b ein und desselben Maschinenrichtungsfadens 1 zu sehen sind. Im vorliegenden Ausführungsbeispiel treffen die Endabschnitte 1a und 1b aufeinander, indem diese über zwei unmittelbar benachbarte Maschinenquerrichtungsfäden 2a und 2b abbinden und zwischen diesen beiden Maschinenquerrichtungsfäden 2a, 2b gemeinsam nach unten aus dem Gewebe geführt werden. Die Treffstelle 18 erstreckt sich im Maschinenrichtung MD betrachtet von dem Maschinenquerrichtungsfaden 2a bis zum Maschinenquerrichtungsfaden 2b.

Die Figur 7b zeigt eine Treffstelle 18 bei der die beiden zusammen geführten Endabschnitte 1a und 1b ein und desselben Maschinenrichtungsfadens 1 zu sehen sind. Im vorliegenden Ausführungsbeispiel treffen die Endabschnitte 1a und 1b aufeinander, indem diese mit drei unmittelbar benachbarten Maschinenquerrichtungsfäden 2a, 2b und 2c gemeinsam verwoben sind, bevor die Endabschnitte 1a, 1b aus dem Gewebe geführt werden. Die Treffstelle 18 erstreckt sich im Maschinenrichtung MD betrachtet von dem Maschinenquerrichtungsfaden 2a bis zum Maschinenquerrichtungsfaden 2c.

Die Figur 7c zeigt eine Treffstelle 18 bei der die beiden zusammen geführten Endabschnitte 1a und 1b ein und desselben Maschinenrichtungsfadens 1 zu sehen sind. Im vorliegenden Ausführungsbeispiel werden die beiden Endabschnitte 1 a, 1 b in Maschinenrichtung betrachtet um zwei Maschinenquerrichtungsfäden 2a, 2d zueinander beabstandet aus dem Gewebe geführt, wodurch an der Treffstelle 18 die beiden Maschinenquerrichtungsfäden 2b, 2c angeordnet sind, die mit keinem der beiden Endabschnitte 1a, 1b verwoben sind. Die Treffstelle 18 erstreckt sich im Maschinenrichtung MD betrachtet von dem Maschinenquerrichtungsfaden 2a bis zum Maschinenquerrichtungsfaden 2d.

Die Figur 7d zeigt eine Treffstelle 18 bei der die beiden zusammen geführten Endabschnitte 1a und 1b ein und desselben Maschinenrichtungsfadens 1 zu sehen sind. Im vorliegenden Ausführungsbeispiel treffen die Endabschnitte 1a und 1b aufeinander, indem diese mit einem Maschinenquerrichtungsfaden 2a gemeinsam verwoben sind, bevor die Endabschnitte 1a, 1b aus dem Gewebe geführt werden. Die Treffstelle 18 ist Maschinenrichtung MD betrachtet auf den Maschinenquerrichtungsfaden 2a beschränkt.

Sämtliche der in den Figuren 7a-7d gezeigten Ausführungen sind für Endabschnitte ein und desselben Maschinenrichtungsfaden gezeigt. Die obigen Ausführungen gelten aber in gleicher Weise für zusammen geführte Endabschnitte unterschiedlicher Maschinenrichtungsfäden.

Abschließend wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z. B. Verfahrensschritten, Einrichtungen, Bereichen, Größen und dergleichen, aufzufassen sind, und in keiner Weise das Vorhandensein anderer oder zusätzlicher Merkmale oder Gruppierungen von anderen oder zusätzlichen Merkmalen ausschließen.

## Patentansprüche

1. Endloses Gewebeband (10) zum Einsatz in einer Papier-, Karton- oder Tissuemaschine mit Maschinenrichtungsfäden (1), die sich mit Maschinenquerrichtungsfäden (2) überkreuzen, wobei zumindest ein Teil der Maschinenrichtungsfäden (1) und/oder Maschinenquerrichtungsfäden (2) durch Garne gebildet sind, die im wesentlichen aus einem thermoplastischen, für Licht einer Wellenlänge bzw. eines Wellenlängenbereichs transparenten Polymermaterial bestehen, wobei das Gewebeband (10) vor dessen Endlosmachen in einem offenen Zustand mit zwei stirnseitigen Enden (3, 4) vorliegt ist und anschließend dadurch endlos gemacht ist, indem Endabschnitte (6, 1a) der Maschinenrichtungsfäden (1) des einen stirnseitigen Endes (3) und Endabschnitte (7, 1b) der Maschinenrichtungsfäden (1) des anderen stirnseitigen Endes (4) des Gewebebandes (10) jeweils paarweise unter Ausbildung von Treffstellen (18) zusammengeführt und zur Ausbildung eines Nahtbereichs (8) mit Maschinenquerrichtungsfäden (2) verwoben sind, wobei zumindest ein Teil der Garne im Nahtbereich (8) aufgrund eines das Licht bei der Wellenlänge absorbierenden und an Garnkontaktstellen angeordneten Materials sowie der Einwirkung des Lichts an den Garnkontaktstellen stoffschlüssig miteinander verbunden sind, wobei im Nahtbereich (8) mehrere zueinander beabstandete streifenförmige Gewebeabschnitte (19, 20) gebildet sind, die sich über die gesamte Breite des Gewebebands (10) in Maschinenquerrichtung (CD) des Gewebebands (10) erstrecken und in denen die Treffstellen (18) und die stoffschlüssig miteinander verbundenen Garnkontaktstellen angeordnet sind, wobei zwischen zwei unmittelbar benachbarten die Treffstellen (18) umfassenden Gewebeabschnitten (19, 20) jeweils ein streifenförmiger Gewebeabschnitt (21) ohne Treffstellen gebildet ist, **dadurch gekennzeichnet, dass** das endlose Gewebeband (10) durch ein Gewebe gebildet ist, das maximal zwei Lagen von Maschinenrichtungsfäden (1) und eine Lage von Maschinenquerrichtungsfäden (2) oder maximal zwei Lagen von Maschinenquerrichtungsfäden (2) und eine Lage von Maschinenrichtungsfäden (1) oder eine Lage von Maschinenquerrichtungsfäden (2) und eine Lage von Maschinenrichtungsfäden (1) hat und dass das endlose Gewebeband (10) eine Fadendichte von 20 bis 100 Maschinenrichtungsfäden (1) pro 2,54cm (inch) und/oder eine Fadendichte von 10 bis 90 Maschinenquerrichtungsfäden (2) pro 2,54cm (inch) hat.

2. Endloses Gewebeband (10) nach Anspruch 1, **dadurch gekennzeichnet, dass** die Wellenlänge im Bereich des nahen Infrarot, insbesondere im Wellenlängenbereich von 700nm bis 1200nm liegt.

3. Endloses Gewebeband (10) nach zumindest einem der vorangehenden Ansprüche, **dadurch gekennzeichnet, dass** zumindest einige der stoffschlüssig miteinander verbundenen Garnkontaktstellen an Stellen gebildet sind, an denen sich Maschinenrichtungsfäden (1) und Maschinenquerrichtungsfäden (2) überkreuzen.

4. Endloses Gewebeband (10) nach zumindest einem der vorangehenden Ansprüche, **dadurch gekennzeichnet, dass** zumindest einige der stoffschlüssig miteinander verbundenen Garnkontaktstellen an Stellen gebildet sind, an denen die zusammengeführten Endabschnitte (6, 7, 1 a, 1 b) der Maschinenrichtungsfäden (1) nebeneinander verlaufen und sich berühren.

5. Endloses Gewebeband (10) nach zumindest einem der vorangehenden Ansprüche, **dadurch gekennzeichnet, dass** das Licht absorbierende Material in das Polymermaterial zumindest einiger der Garne eingebracht ist.

6. Endloses Gewebeband (10) nach zumindest einem der vorangehenden Ansprüche, **dadurch gekennzeichnet, dass** zumindest einige der Garne mit dem das Licht absorbierenden Material beschichtet sind.

7. Endloses Gewebeband (10) nach zumindest einem der vorangehenden Ansprüche, **dadurch gekennzeichnet, dass** zumindest einige der Maschinenquerrichtungsfäden (2), die im Bereich der die Treffstellen (18) enthaltenden Streifen (19, 20) angeordnet sind, das Licht absorbierende Material umfassen.

8. Endloses Gewebeband (10) nach zumindest einem der vorangehenden Ansprüche, **dadurch gekennzeichnet, dass** das absorbierende Material Ruß und/oder Farbpigmente und/oder CNT umfasst.

9. Endloses Gewebeband (10) nach zumindest einem der vorangehenden Ansprüche, **dadurch gekennzeichnet, dass** das absorbierende Material in dem Polymermaterial der Garne einen Anteil von 0,1 Gew.% bis 10 Gew.%, bevorzugt 1 Gew.% bis 3 Gew.% hat.

10. Endloses Gewebeband (10) nach zumindest einem der vorangehenden Ansprüche, **dadurch gekennzeichnet, dass** das endlose Gewebeband (10) ein TAD-Sieb ist.

11. Endloses Gewebeband (10) nach zumindest einem der vorangehenden Ansprüche, **dadurch gekennzeichnet, dass** die jeweils paarweise zusammengeführten und Treffstellen (18) bildenden Endabschnitte (6, 7, 1a, 1b) an der jeweiligen Treffstelle (18) mit maximal fünf, bevorzugt maximal drei, besonders bevorzugt maximal einem gemeinsamen Schussfaden (2) verwoben sind.

12. Endloses Gewebeband (10) nach zumindest einem der vorangehenden Ansprüche, **dadurch gekennzeichnet, dass** die jeweils paarweise zusammengeführten und Treffstellen (18) bildenden Endabschnitte (6, 7, 1a, 1b) an der jeweiligen Treffstelle (18) mit keinem gemeinsamen Schussfaden (2) verwoben sind und zwischen zwei aufeinander folgenden Schussfäden (2) verlaufend, insbesondere zwischen zwei unmittelbar aufeinander folgenden Schussfäden (2) verlaufend, das Gewebe (10) gemeinsam verlassen.

13. Endloses Gewebeband (10) nach zumindest einem der vorangehenden Ansprüche, **dadurch gekennzeichnet, dass** die Permeabilität im Bereich der Treffstellen (18) umfassenden Streifen (19, 20) um maximal 15%, bevorzugt maximal 10% von der Permeabilität des Gewebebandes (10) außerhalb des Nahtbereichs (8) abweicht.

14. Endloses Gewebeband (10) nach zumindest einem der vorangehenden Ansprüche, **dadurch gekennzeichnet, dass** die die Treffstellen (18) umfassenden streifenförmigen Gewebeabschnitte (19, 20) in Maschinenrichtung (MD) eine geringere Erstreckung haben, als die im Nahtbereich (8) angeordneten und keine Treffstellen umfassenden streifenförmigen Gewebeabschnitte (21).

15. Endloses Gewebeband (10) nach zumindest einem der vorangehenden Ansprüche, **dadurch gekennzeichnet, dass** die die Treffstellen (18) umfassenden streifenförmigen Gewebeabschnitte (19, 20) eine Erstreckung in Maschinenrichtung (MD) im Bereich von 5 bis 60 mm haben.

16. Endloses Gewebeband (10) nach zumindest einem der vorangehenden Ansprüche, **dadurch gekennzeichnet, dass** die im Nahtbereich (8) angeordneten und keine Treffstellen umfassenden streifenförmigen Gewebeabschnitte (21) eine Erstreckung in Maschinenrichtung (MD) im Bereich von 10 bis 80 mm haben.

17. Endloses Gewebeband (10) nach zumindest einem der vorangehenden Ansprüche, **dadurch gekennzeichnet, dass** der Nahtbereich (8) eine Erstreckung in Maschinenrichtung (MD) im Bereich von 5 bis 50 cm hat.

## Claims

1. Endless woven-fabric belt (10) for use in a paper, cardboard, or tissue machine, having machine-direction threads (1) which intersect with machine cross-direction threads (2), wherein at least part of the machine direction threads (1) and/or machine cross-direction threads (2) are formed by yarns which are composed substantially of a thermoplastic polymer material that is transparent to light of one wave length or of a wave length range, respectively, wherein the woven-fabric belt (10) prior to being rendered endless is present in an open state having two front-side ends (3, 4), and is subsequently rendered endless in that end portions (6, 1a) of the machine direction threads (1) of the one front-side end (3) and end portions (7, 1b) of the machine direction threads (1) of the other front-side end (4) of the woven-fabric belt (10) are in each case collected in pairs while configuring (18) meeting points (18), and for configuring a seam region (8) are interwoven with machine cross-direction threads (2), wherein at least part of the yarns in the seam region (8) by virtue of a material that absorbs the light at the wave length and that is disposed at yarn contact points, and by virtue of the effect of the light on the yarn contact points, are interconnected in a materially integral manner, **wherein** a plurality of mutually spaced apart strip-shaped woven-fabric portions (19, 20) are formed in the seam region (8), said woven-fabric portions (8) in the machine cross direction (CD) of the woven-fabric belt (10) extending across the entire width of the woven-fabric belt (10), and the meeting points (18) and the yarn contact points that are interconnected in a materially integral manner being disposed in said woven-fabric portions, wherein in each case one strip-shaped woven-fabric portion (21) without meeting points is formed between two directly adjacent woven-fabric portions (19, 20) that comprise the meeting points (18), **characterized in that** the endless woven-fabric belt (10) is formed by a woven fabric which has a maximum of two tiers of machine direction threads (1) and one tier of machine cross-direction threads (2), or a maximum of two tiers of machine cross-direction threads (2) and one tier of machine direction threads (1), or one tier of machine cross-direction threads (2) and one tier of machine direction threads (1), and **in that** the endless woven-fabric belt (10) has a thread density of 20 to 100 machine direction threads (1) per 2.54 cm (inch), and/or a thread density of 10 to 90 machine cross-direction threads (2) per 2.54 cm (inch).

2. Endless woven-fabric belt (10) according to Claim 1, **characterized in that** the wave length is in the range of near infrared, in particular in the wave length range of 700 nm to 1200 nm.

3. Endless woven-fabric belt (10) according to at least one of the preceding claims, **characterized in that** at least some of the yarn contact points that are interconnected in a materially integral manner are formed at points where the machine direction threads (1) and the machine cross-direction thread (2) intersect.

4. Endless woven-fabric belt (10) according to at least one of the preceding claims, **characterized in that** at least some of the yarn contact points that are interconnected in a materially integral manner are formed at points where the collected end portions (6, 7, 1a, 1b) of the machine direction threads (1) run beside one another and are in mutual contact.

5. Endless woven-fabric belt (10) according to at least one of the preceding claims, **characterized in that** the light-absorbent material is incorporated in the polymer material of at least some of the yarns.

6. Endless woven-fabric belt (10) according to at least one of the preceding claims, **characterized in that** at least some of the yarns are coated with the light-absorbent material.

7. Endless woven-fabric belt (10) according to at least one of the preceding claims, **characterized in that** at least some of the machine cross-direction threads (2) which are disposed in the region of the strips (19, 20) that contain the meeting points (18) comprise the light-absorbent material.

8. Endless woven-fabric belt (10) according to at least one of the preceding claims, **characterized in that** the absorbent material comprises carbon black and/or pigments and/or CNT.

9. Endless woven-fabric belt (10) according to at least one of the preceding claims, **characterized in that** the absorbent material in the polymer material of the yarns has a proportion of 0.1% by weight to 10% by weight, preferably 1% by weight to 3% by weight.

10. Endless woven-fabric belt (10) according to at least one of the preceding claims, **characterized in that** the endless woven-fabric belt (10) is a TAD screen.

11. Endless woven-fabric belt (10) according to at least one of the preceding claims, **characterized in that** the end portions (6, 7, 1a, 1b) that in each case are collected in pairs and form meeting points (18), at the respective meeting point (18) are interwoven by way of a maximum of five, preferably a maximum of three, particularly preferably a maximum of one common weft thread (2).

12. Endless woven-fabric belt (10) according to at least one of the preceding claims, **characterized in that** the end portions (6, 7, 1a, 1b) that in each case are collected in pairs and form meeting points (18), at the respective meeting point (18) are not interwoven by way of a common weft thread (2), and conjointly leave the woven fabric (10) so as to run between two mutually sequential weft threads (2), in particular so as to run between two mutually directly sequential weft threads (2).

13. Endless woven fabric (10) according to at least one of the preceding claims, **characterized in that** the permeability in the region of the strips (19, 20) that comprise the meeting points (18) deviates from the permeability of the woven-fabric belt (10) outside the seam region by a maximum of 15%, preferably a maximum of 10%.

14. Endless woven-fabric belt (10) according to at least one of the preceding claims, **characterized in that** the strip-shaped woven-fabric portions (19, 20) that comprise the meeting points (18) in the machine direction (MD) have an extent that is smaller than that of the strip-shaped woven-fabric portions (21) that are disposed in the seam region (8) and do not comprise any meeting points.

15. Endless woven fabric belt (10) according to at least one of the preceding claims, **characterized in that** the strip-shaped woven-fabric portions (19, 20) that comprise the meeting points (18) in the machine direction (MD) have an extent in the range of 5 to 60 mm.

16. Endless woven fabric (10) according to at least one of the preceding claims, **characterized in that** the strip-shaped woven fabric portions (21) that are disposed in the seam region (8) and do not comprise any meeting points in the machine direction (MD) have an extent in the range of 10 to 80 mm.

17. Endless woven-fabric (10) according to at least one of the preceding claims, **characterized in that** the seam region (8) in the machine direction (MD) has an extent in the range of 5 to 50 cm.

## Revendications

1. Bande de tissu sans fin (10) destinée à être utilisée dans une machine de fabrication de papier, de carton ou de tissu ouaté, avec des fils dans le sens machine (1) qui se croisent avec des fils dans le sens travers (2), au moins une partie des fils dans le sens machine (1) et/ou des fils dans le sens travers (2) étant formés par des filaments qui se composent essentiellement d'un matériau polymère thermoplastique transparent à la lumière d'une longueur d'onde ou respectivement d'une plage de longueurs d'onde, la bande de tissu (10) se présentant, avant d'être rendue sans fin, dans un état ouvert, avec deux extrémités (3, 4) côté frontal, et puis étant rendue sans fin par le fait que des tronçons d'extrémité (6, 1a) des fils dans le sens machine (1) d'une extrémité (3) côté frontal et des tronçons d'extrémité (7, 1b) des fils dans le sens machine (1) de l'autre extrémité (4) côté frontal de la bande de tissu (10) sont réunis respectivement par paires en formant des intersections (18) et sont tissés ensemble pour former une zone de couture (8) avec des fils dans le sens travers (2), au moins une partie des filaments dans la zone de couture (8) étant raccordés les uns aux autres par liaison de matière du fait d'un matériau absorbant la lumière pour la longueur d'onde et disposé sur des points de contact de filaments ainsi que du fait de l'action de la lumière au niveau des points de contact de filaments, dans laquelle plusieurs tronçons de tissu (19, 20) en forme de ruban espacés les uns des autres sont formés dans la zone de couture (8) et s'étendent sur toute la largeur de la bande de tissu sans fin (10) dans le sens travers de machine (CD) de la bande de tissu (10) et dans lesquels sont disposés les intersections (18) et les points de contact de filaments raccordés les uns aux autres par liaison de matière, respectivement un tronçon de tissu (21) en forme de ruban étant formé sans intersections entre deux tronçons de tissu (19, 20) directement voisins comprenant les intersections (18), **caractérisée en ce que** la bande de tissu sans fin (10) est formée par un tissu qui a au maximum deux couches de fils dans le sens machine (1) et une couche de fils dans le sens travers (2) ou au maximum deux couches de fils dans le sens travers (2) et une couche de fils dans le sens machine (1) ou une couche de fils dans le sens travers (2) et une couche de fils dans le sens machine (1), et **en ce que** la bande de tissu sans fin (10) a une densité de fils de 20 à 100 fils dans le sens machine (1) par 2,54 cm (pouce) et/ou une densité de 10 à 90 fils dans le sens travers (2) par 2,54 cm (pouce).

2. Bande de tissu sans fin (10) selon la revendication 1, **caractérisée en ce que** la longueur d'onde se situe dans la plage du proche infrarouge, en particulier dans la plage de longueur d'onde de 700 nm à 1 200 nm.

3. Bande de tissu sans fin (10) selon au moins l'une des revendications précédentes, **caractérisée en ce qu'**au moins quelques-uns des points de contact de filaments raccordés les uns aux autres par liaison de matière sont formés dans des endroits où des fils dans le sens machine (1) et des fils dans le sens travers (2) se croisent.

4. Bande de tissu sans fin (10) selon au moins l'une des revendications précédentes, **caractérisée en ce qu'**au moins quelques-uns des points de contact de filaments raccordés les uns aux autres par liaison de matière sont formés dans des endroits où les tronçons d'extrémité (6, 7, 1a, 1b) réunis des fils dans le sens machine (1) sont juxtaposés et se touchent.

5. Bande de tissu sans fin (10) selon au moins l'une des revendications précédentes, **caractérisée en ce que** le matériau absorbant la lumière est mis en place dans le matériau polymère d'au moins quelques-uns des filaments.

6. Bande de tissu sans fin (10) selon au moins l'une des revendications précédentes, **caractérisée en ce qu'**au moins quelques-uns des filaments sont revêtus du matériau absorbant la lumière.

7. Bande de tissu sans fin (10) selon au moins l'une des revendications précédentes, **caractérisée en ce qu'**au moins quelques-uns des fils dans le sens travers (2) qui sont disposés dans la zone des rubans (19, 20) contenant les intersections (18) comprennent le matériau absorbant la lumière.

8. Bande de tissu sans fin (10) selon au moins l'une des revendications précédentes, **caractérisée en ce que** le matériau absorbant la lumière comprend des suies et/ou des pigments colorants et/ou des nanotubes de carbone (CNT).

9. Bande de tissu sans fin (10) selon au moins l'une des revendications précédentes, **caractérisée en ce que** le matériau absorbant dans le matériau polymère des filaments a une proportion de 0,1 %-poids à 10 %-poids, de préférence de 1 %-poids à 3 %-poids.

10. Bande de tissu sans fin (10) selon au moins l'une des revendications précédentes, **caractérisée en ce que** la bande de tissu sans fin (10) est un tamis TAD.

11. Bande de tissu sans fin (10) selon au moins l'une des revendications précédentes, **caractérisée en ce que** les tronçons d'extrémité (6, 7, 1a, 1b) respectivement réunis par paires et formant des intersections (18) sont tissés ensemble au niveau de l'intersection (18) respective avec au maximum cinq, de préférence au maximum trois, de façon particulièrement préférée au maximum un fil de trame (2) commun.

12. Bande de tissu sans fin (10) selon au moins l'une des revendications précédentes, **caractérisée en ce que** les tronçons d'extrémité (6, 7, 1a, 1b) respectivement réunis par paires et formant des intersections (18) sont tissés ensemble au niveau de l'intersection (18) respective sans aucun fil de trame (2) commun et quittent conjointement le tissu (10) entre deux fils de trame (2) qui se suivent, en particulier entre deux fils de trame (2) qui se suivent directement.

13. Bande de tissu sans fin (10) selon au moins l'une des revendications précédentes, **caractérisée en ce que** la perméabilité dans la zone des rubans (19, 20) comprenant des intersections (18) diffère de 15 % au maximum, de préférence de 10 %, de la perméabilité de la bande de tissu (10) à l'extérieur de la zone de couture (8).

14. Bande de tissu sans fin (10) selon au moins l'une des revendications précédentes, **caractérisée en ce que** les tronçons de tissu (19, 20) en forme de ruban contenant les intersections (18) dans le sens machine (MD) ont une moindre étendue que les tronçons de tissu (21) en forme de ruban disposés dans la zone de couture (8) ne comprenant pas d'intersections (18).

15. Bande de tissu sans fin (10) selon au moins l'une des revendications précédentes, **caractérisée en ce que** les tronçons de tissu (19, 20) en forme de ruban contenant les intersections (18) ont une étendue dans le sens machine (MD) dans la plage de 5 à 60 mm.

16. Bande de tissu sans fin (10) selon au moins l'une des revendications précédentes, **caractérisée en ce que** les tronçons de tissu (21) en forme de ruban disposés dans la zone de couture (8) et ne comprenant pas d'intersections ont dans le sens machine (MD) une étendue dans la plage de 10 à 80 mm.

17. Bande de tissu sans fin (10) selon au moins l'une des revendications précédentes, **caractérisée en ce que** la zone de couture (8) a dans le sens machine (MD) une étendue dans la plage de 5 à 50 cm.
